(19) Europäisches Patentamt
European Patent Office
Office européen des brevets

(11) **EP 2 080 298 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **07803539.1**

(22) Anmeldetag: **18.09.2007**

(51) Int Cl.:
***G02B 6/27*** *(2006.01)*

(86) Internationale Anmeldenummer:
**PCT/EP2007/059834**

(87) Internationale Veröffentlichungsnummer:
**WO 2008/037624 (03.04.2008 Gazette 2008/14)**

(54) **ANORDNUNG ZUR EINSTELLUNG UND KOMPENSATION VON POLARISATIONSMODENDISPERSION ERSTER UND ZWEITER ORDNUNG**

ARRANGEMENT FOR THE ADJUSTMENT AND COMPENSATION OF POLARIZATION MODE DISPERSION OF THE FIRST AND SECOND ORDERS

CONFIGURATION POUR LE RÉGLAGE ET LA COMPENSATION D'UNE DISPERSION DE MODES DE POLARISATION DE PREMIER ET SECOND ORDRE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.09.2006 DE 102006045133**

(43) Veröffentlichungstag der Anmeldung:
**22.07.2009 Patentblatt 2009/30**

(73) Patentinhaber: **Nokia Siemens Networks GmbH & Co. KG**
**81541 München (DE)**

(72) Erfinder: **KRUMMRICH, Peter**
**44149 Dortmund (DE)**

(56) Entgegenhaltungen:
**EP-A- 1 530 309        US-A1- 2002 075 477**
**US-A1- 2002 118 455        US-B1- 6 778 782**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Anordnung und ein Verfahren zur Einstellung von Polarisationsmodendispersion erster und zweiter Ordnung und eine Anordnung zur Kompensation von Polarisationsmodendispersion erster und zweiter Ordnung.

Optische Übertragungssysteme für den Weitverkehrsbereich verwenden derzeit Kanaldatenraten von bis zu 10 Gbit/s. Die kommerzielle Verfügbarkeit von Routern mit 40 GBit/s-Schnittstellen stellt die Betreiber vor das Problem, Signale mit höheren Datenraten transportieren zu müssen. Da ein Heruntermultiplexen der Router-Ausgangssignale mit hohen Kosten und hohem Aufwand verbunden wäre, suchen die Betreiber nach Möglichkeiten, 40 GBit/s-Signale in terrestrischen Weitverkehrsnetzen zu übertragen. Beim Aufbau des 40 GBit/s-Netzes sollen bereits verlegte Glasfasern zum Einsatz kommen. Diese wurden vor vielen Jahren hergestellt und zeigen gegenüber den neu hergestellten Glasfasern eine hohe Polarisationsmodendispersion (engl. "polarisation-mode dispersion", abgekürzt PMD). Diese beeinträchtigt nachhaltig die Signalqualität.

Polarisationsmodendispersion ist eine Eigenschaft monomodiger optischer Fasern, bei der die Energie eines optischen Eingangssignals einer bestimmten Wellenlänge bzw. Trägerfrequenz in der Faser in einem Modus geführt wird, der in zwei zueinander orthogonalen Polarisationen auftreten kann. Diese beiden Polarisationszustände werden häufig als Polarisationsmoden oder auch als Eigenzustände oder Eigenmoden der Faser bezeichnet. Die Polarisationsmoden besitzen aufgrund der Spannungs-Doppelbrechung oder aufgrund anderer Unregelmäßigkeiten des Brechungsindexes in der Faser unterschiedliche Ausbreitungsgeschwindigkeiten. Die daraus resultierende Laufzeitdifferenz der beiden orthogonalen Polarisationsmoden beim Durchlaufen der Faser wird als differentielle Gruppenlaufzeit oderverzögerung (engl. "differential group delay", abgekürzt DGD) bezeichnet. Ihr Mittelwert wird PMD-Verzögerung $\Delta\tau$ genannt und wird in erster Ordnung in ps angegeben.

Ähnlich wie die chromatische Dispersion führt die PMD in optischen Übertragungssystemen insbesondere mit hohen Datenraten zu Verzerrungen der Impulsform des optischen Signals und zusätzlich zu einer Transformation des Eingangspolarisationszustandes. Allerdings handelt es sich bei der PMD um einen stochastischen dynamischen Effekt, was sowohl die Messung als auch die Kompensation erschwert. PMD variiert in Abhängigkeit von der Zeit und der Wellenlänge. Zum einen ist der Laufzeitunterschied zwischen den beiden Polarisationsmoden und insbesondere die Polarisationstransformationseigenschaft sensibel gegenüber Schwankungen der Umgebungsbedingungen, wie Temperatur, mechanischen Spannungen in der Faser oder beispielsweise Vibrationen der Faser. Dies bewirkt unregelmäßige zeitliche Variationen des Übertragungsverhaltens der Faser. Zum anderen bewirkt die Wellenlängenabhängigkeit, dass sich sowohl die Eigenzustände oder Polarisationsmoden, als auch der Polarisationszustand der Polarisationsmoden in Abhängigkeit von der Wellenlänge des optischen Signals ändern. Handelt es sich bei dem optischen Signal um ein breitbandiges Signal, das aus einer Vielzahl von spektralen Komponenten zusammengesetzt ist, so sieht jede Spektralkomponente eine andere Doppelbrechung und erfährt demnach eine andere Laufzeit und eine andere Polarisationstransformation durch die Faser.

Um der Wellenlängenabhängigkeit bzw. der Frequenzabhängigkeit Rechnung zu tragen, wird für die PMD eine Reihenentwicklung nach der Frequenz des Signallichts angesetzt. Der frequenzunabhängige erste Term der Reihenentwicklung wird als PMD erster Ordnung bezeichnet und entspricht der Gruppenlaufzeitdifferenz der beiden Eigenmoden bei der Trägerfrequenz des optischen Signals. Bei den Termen höherer Ordnung wird die Wellenlängenabhängigkeit bzw. Frequenzabhängigkeit der PMD berücksichtigt. Bei der PMD zweiter Ordnung (engl. "second order polarisation-mode dispersion", abgekürzt SOPMD) werden zwei Ausprägungen unterschieden: die Depolarisation (engl. "depolarisation", abgekürzt DEP) und die polarisationsabhängige chromatische Dispersion (engl. "polarisation dependent chromatic dispersion", abgekürzt PCD). Die PCD bewirkt ein Auseinanderlaufen der einzelnen Spektralkomponenten der Polarisationsmoden eines Impulses. Die DEP bewirkt eine Änderung der Polarisation der einzelnen Spektralkomponenten. Durch die DEP wird ein ursprünglich polarisiertes Signal teilweise depolarisiert.

Aufgrund der erhöhten Bandbreite der optischen Signale mit zunehmender Datenrate wirkt sich bei einer Datenrate von 40 Gbit/s die PMD höherer Ordnung verstärkt aus. Bei einer Streckenlänge von mehreren hundert bis knapp über 1000 km kommen PMD-Werte zusammen, welche die PMD-Toleranz heute verfügbarer Empfänger um mehr als das Doppelte übersteigen. Für eine fehlerfreie Übertragung reicht eine Kompensation der PMD erster Ordnung nicht mehr aus. Dies bedeutet, dass beim Übergang auf 40 GBit-Systeme der Bedarf wächst, PMD-bedingte Verzerrungen auch höherer Ordnung zu kompensieren.

Aus der Literatur sind Kompensatoren für PMD höherer Ordnung bekannt, deren Stellglied aus mehreren Polarisationsstellern und mehreren doppelbrechenden Elementen bestehen. Die Regelung dieser PMD-Kompensatoren erweist sich jedoch als sehr schwierig, weil der Zusammenhang zwischen den gewählten Einstellungen der Polarisationssteller und der resultierenden PMD erster und zweiter Ordnung des Stellglieds nicht bekannt ist. Aus diesem Grund kann die Regelung nur mit einem iterativen Ansatz erfolgen, bei dem jeweils ein Polarisationssteller in kleinen Schritten verstellt wird.

Statt eines iterativen Abgleichs, besteht die Möglichkeit, eine direkte Einstellung des PMD-Kompensator-Stellglieds in einem Schritt durchzuführen, wenn zuvor die PMD erster und zweiter Ordnung am Ausgang der Strecke mittels eines Polarimeters gemessen wurde. Zu diesem Zweck muss das Stellglied eine gezielte Einstellung der PMD erster und zweiter Ordnung erlauben. Für die Emulation der Strecken-PMD sind Laborgeräte bekannt, bei denen sich die PMD erster und zweiter Ordnung gezielt einstellen lässt, jedoch nicht die Aufteilung zwischen den beiden Ausprägungen der PMD zweiter Ordnung. Für einen Einsatz als Stellglied eines PMD-Kompensators eignen sich diese Geräte damit nicht, weil die beiden Ausprägungen zu unterschiedlichen Signalverzerrungen führen. Verzerrungen eines Signals durch PCD lassen sich mit einem Stellglied, das nur DEP aufweist, nicht kompensieren.

Aus einer älteren Patentanmeldung mit der Anmeldenr. 10 2006 008 748.8 ist eine Anordnung bekannt, die aus mindestens vier in Serie geschalteten doppelbrechenden Elementen besteht, die für eine gegebene Trägerfrequenz neben der Einstellung einer gewünschten Polarisationsmodendispersion erster Ordnung eine getrennte Einstellung der Depolarisation und der polarisationsabhängigen chromatischen Dispersion erlaubt. Allerdings eignet sich diese Anordnung nicht für breitbandige Datensignale, wie sie mittels NRZ- oder vergleichbaren Modulationsverfahren generiert werden.

Aus der europäischen Patentanmeldung EP 1 087 245 ist eine weitere Anordnung zur Einschränkung von Polarisationsmodendispersion erster und zweiter Ordnung bekannt. Die Anordnung enthält ein Element, das die PMD zweiter Ordnung getrennt nach ihren Ursachen kompensiert. Die PCD und DEP werden mittels eines gechirpten Fasergitters mit variablem Temperaturgradienten, einem komplementär ausgestalteten optischen Filter mit variabler spektralen Transmission und einem Polarisator kompensiert. Die gesamte Anordnung erlaubt demnach auch für breitbandige optische Signale eine gezielte Einstellung der PMD erster Ordnung und der PMD zweiter Ordnung, wobei die PMD zweiter Ordnung möglichst getrennt nach ihren beiden Ausprägungen DEP und PCD einstellbar ist.

Es ist die Aufgabe der vorliegenden Erfindung, eine weitere Anordnung anzugeben, welche für breitbandige optische Signale eine gezielte Einstellung der PMD erster Ordnung und der beiden Ausprägungen der PMD zweiter Ordnung erlaubt.

Diese Aufgabe wird durch die Merkmale des Patentanspruchs 1 gelöst.

Neben der Einstellung von PMD erster Ordnung wird für ein breitbandiges Datensignal eine getrennte Einstellung von DEP und PCD durch eine Serienschaltung aus einem ersten Emulationselement mit einer ersten einstellbaren Laufzeitdifferenz zwischen der schnellen und langsamen Hauptachse und mit einstellbarer chromatischer Dispersion, aus einem Polarisationssteller zur Einstellung eines Polarisationsdrehwinkels und aus einem zweiten Emulationselement mit einer zweiten einstellbaren Laufzeitdifferenz erreicht. Vorteilhaft können mit der erfindungsgemäßen Anordnung die ersten und zweiten Laufzeitdifferenzen und/oder der Polarisationsdrehwinkel und/oder die chromatische Dispersion derart eingestellt werden, dass sich jeweils ein gewünschter Wert für die differentielle Gruppenlaufzeit (DGD) und/oder die Depolarisation (DEP) und/oder die polarisationsabhängige chromatische Dispersion (PCD) ergibt. Die erfindungsgemäße Anordnung zeichnet sich durch ihre Einfachheit aus. Insbesondere können durch die Einstellung der chromatischen Dispersion beliebige frequenzabhängige Laufzeiten der Spektralkomponenten eines breitbandigen optischen Eingangssignals erzeugt werden.

In einer Ausführungsvariante weisen beide Emulationselemente Mittel zur Einstellung der chromatischen Dispersion auf. Auf diese Weise kann die PCD auf beide Emulationselemente aufgeteilt werden. Dies ist insbesondere dann von Vorteil, wenn die chromatische Dispersion, die innerhalb des ersten Emulationselementes erzeugt wird, aufgrund eines begrenzten Einstellbereiches nicht ausreicht, um einen gewünschten PCD-Wert einzustellen.

In einer vorteilhaften Ausführungsvariante werden die Funktion der einstellbaren Laufzeitdifferenz mittels eines variablen doppelbrechenden Elementes und die Funktion der einstellbaren chromatischen Dispersion mittels eines variablen Dispersionskompensators realisiert.

Beide Funktionen können einfach kombiniert werden, wenn das doppelbrechende Element als zweiarmige Mach-Zehnder-Interferometer-Anordnung realisiert ist, die eingangsseitig einen Strahlteiler und ausgangsseitig einen Strahlkombinierer aufweisen. Der Strahlteiler teilt das Eingangssignal auf zwei orthogonal zueinander polarisierte Teilsignale auf, die anschließend unterschiedlich verzögert und unterschiedliche chromatische Dispersionen erfahren.

Je nach Ausführungsvariante ist ein variabler Dispersionskompensator und eine variable Verzögerungsleitung entweder in einem der beiden Teilpfade oder in beiden Teilpfaden angeordnet. Ferner ist es möglich, in beiden Pfaden einen Dispersionskompensator und in nur einem Pfad die Verzögerungsleitung unterzubringen. Auch eine Anordnung aus Dispersionskompensator in einem Pfad und Verzögerungsleitung in dem anderen Pfad ist denkbar. Damit ist eine flexible Handhabung gewährleistet.

Sind in beiden Pfaden Dispersionskompensatoren mit unterschiedlichen Vorzeichen der eingestellten Dispersion angeordnet, so lässt sich vorteilhaft eine symmetrische Verzerrung des Eingangssignals erreichen.

Wird in mindestens einem der beiden Teilpfade ein Mittel zur Pegeleinstellung eingebracht, lassen sich polarisationsabhängige Verluste vermeiden.

Die erfindungsgemäße Anordnung kann sowohl zur Emulation als auch zur Kompensation von PMD eingesetzt werden. Im Gegensatz zu adaptiven Verfahren wird mittels des erfindungsgemäßen Stellgliedes vorteilhaft in einem Schritt eine Kompensation erreicht. Dazu wird die PMD mittels eines spektral hochauflösenden Polarimeters bestimmt, das an eine Steuereinheit angeschlossen ist. Diese stellt in Abhängigkeit von den ermittelten Werten die erfindungsgemäße Anordnung ein.

Weitere Vorteile der Erfindung sind in den Unteransprüchen und den Ausführungsbeispielen angegeben.

Im Folgenden wird die Erfindung unter Zuhilfenahme der Figuren 1 bis 3 näher erläutert:

Dabei zeigen

Figur 1    ein Blockschaltbild einer ersten Ausführungsvariante des erfindungsgemäßen PMD-Emulators,
Figur 2    eine Skizze eines PMD-Vektores im Stokes-Raum zur Verdeutlichung von PMD erster und zweiter Ordnung,
Figur 3    ein Blockschaltbild einer zweiten Ausführungsvariante des erfindungsgemäßen PMD-Emulators,
Figur 4    ein Blockschaltbild eines PMD-Kompensators.

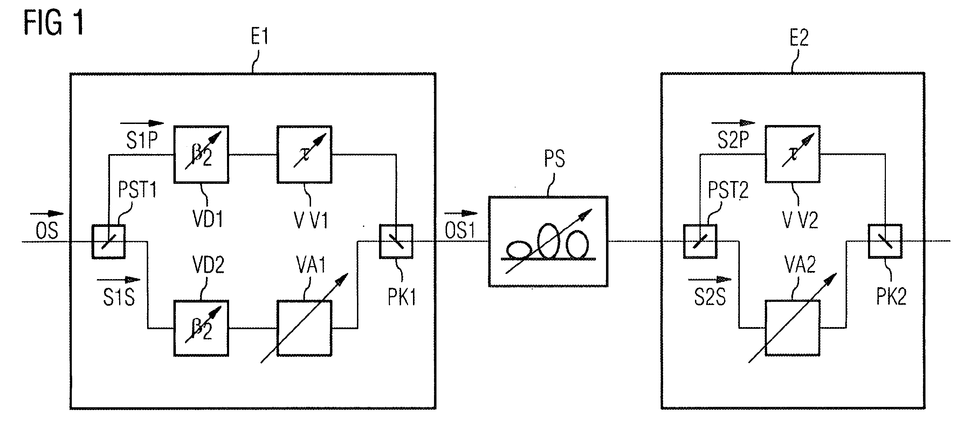

Figur 1 zeigt ein Blockschaltbild einer ersten Ausführungsvariante des erfindungsgemäßen PMD-Emulators, der aus einer Serienschaltung aus einem ersten Emulationselement E1, einem Polarisationssteller PS und einem zweiten Emulationselement E2 aufgebaut ist. Das erste Emulationselement E1 entspricht einem doppelbrechenden Element, dessen DGD über der Frequenz linear zu- bzw. abnimmt und bei dem die DGD und die Ableitung der DGD nach der Frequenz, d.h. die chromatische Dispersion PCD, einstellbar sind. Das zweite Emulationselement E2 ist hier als ein dispersionsfreies einstellbares linear doppelbrechendes Element ausgeführt, d.h. die eingestellte DGD ist frequenzunabhängig.

Ein optisches Signal OS wird dem ersten Emulationselement E1 zugeführt. Bei dem optischen Signal OS handelt es sich beispielsweise um ein breitbandiges WDM-Signal, das aus einer Vielzahl von intensitäts- oder phasenmodulierten Datensignalen zusammengesetzt ist. Die Datensignale lassen sich im Frequenzraum gemäß dem Satz von Fourier durch ein Spektrum von Frequenz- oder Fourierkomponenten mit definierten Phasen um eine Mittenfrequenz, der optischen Trägerfrequenz, beschreiben, d.h. die optischen Eingangssignale belegen abhängig von Datenrate und Modulationsformat einen bestimmten Frequenzbereich oder Kanal.

Das dem Emulator zugeführte optische Signal OS wird am Eingang von E1 durch einen ersten Polarisations-Strahlteiler PST1 in zwei Teilsignale S1P und S1S mit zueinander orthogonaler Polarisation aufgespalten. In diesem Ausführungsbeispiel durchläuft jedes dieser beiden Teilsignale im Anschluss einen variablen Dispersionskompensator VD1 oder VD2. Alternativ kann auch nur ein variabler Dispersionskompensator in einem der Zweige angeordnet werden. Die Dispersionskompensatoren VD1 und VD2 werden hier als dispersive Elemente eingesetzt, mit denen für jede Polarisationsrichtung frequenzabhängige Laufzeiten der einzelnen Frequenzkomponenten des optischen Signals generiert werden. Der Phasenverlauf der Dispersionskompensatoren wird so gewählt, dass die erste und die zweite Ableitung der Ausbreitungskonstanten $\beta$ nach der Frequenz von Null verschiedene Werte aufweisen, während höhere Ableitungen vernachlässigbar klein werden.

Wird die Signalausbreitung nur von der ersten Ableitung der Ausbreitungskonstanten $\beta$ nach der Frequenz bestimmt und werden höhere Ableitungen der Ausbreitungskonstanten nach der Frequenz vernachlässigt, so ändert sich die Phase des Datensignals linear mit der Frequenz, und das Datensignal selbst wird eine gewisse Zeitspanne, die als Gruppenlaufzeit bezeichnet wird, verzögert. In diesem Fall bleibt die Signalform unverändert. Eine Signalverzerrung tritt erst bei Berücksichtigung der zweiten Ableitung der Ausbreitungskonstanten $\beta$ nach der Frequenz auf. Diese Signalverzerrung um die Mittenfrequenz wird als Gruppengeschwindigkeitsdispersion (engl. "group velocity dispersion", abgekürzt GVD) bezeichnet und mittels des GVD-Parameters $\beta_2$ beschrieben. Je nach gewähltem Vorzeichen des GVD-Parameters $\beta_2$ propagieren einzelne Frequenzkomponenten des optischen Signals frequenzabhängig schneller oder langsamer.

Wird in jedem Zweig von E1 ein Dispersionskompensator eingefügt, so erfährt jedes der beiden senkrecht zueinander polarisierten Teilsignale eine frequenzabhängige Änderung der Gruppenlaufzeit. Durch den Dispersionskompensator ändert sich für jedes Datensignal die Phase des Datensignals quadratisch mit zunehmendem Abstand von der Mittenfrequenz, was einer linearen Änderung der Gruppenlaufzeit entspricht. Dies bedeutet, dass für jede Polarisation die differentielle Gruppenlaufzeit DGD frequenzabhängig abgeändert werden kann. Wird die Änderung der DGD nach der Frequenz konstant gewählt, so ergibt sich eine spektral "flache" Emulation der PCD. Für alle Trägerfrequenzen ist dann die Änderung der Gruppenlaufzeit gleich, oder anders ausgedrückt, die Signalverzerrung ist für jedes Datensignal des breitbandigen WDM-Signals gleich. Die dritte und weitere höhere Ableitungen der Ausbreitungskonstanten nach der Frequenz sind in diesem Fall zu vernachlässigen.

In welcher Art die Signalverzerrung emuliert wird, hängt von der Ausgestaltung des Dispersionskompensators ab. Insbesondere wird die Verzerrung des Eingangssignals von der Wahl des Vorzeichens des GVD-Parameters des Dispersionskompensators beeinflußt. Ist in beiden Zweigen eines Emulationselementes jeweils ein Dispersionskompensator untergebracht, so werden beide Teilsignale frequenzabhängig verzögert und das am Ausgang des Emulationselementes resultierende Signal ist bzgl. der Frequenzkomponenten symmetrisch verzerrt. Wird nur in einem Zweig ein dispersives Element untergebracht, so ergibt sich eine asymmetrische Verzerrung, weil nur eines der Teilsignale eine frequenzabhängige Verzögerung erfährt.

Die Realisierung des variablen Dispersionskompensators kann beispielsweise mit Hilfe eines abstimmbaren Faser-Bragg-Gitters in Kombination mit einem Zirkulator erfolgen, durch ein virtuell abgebildetes Phasenfeld (virtually images phase array, VIPA), durch gekoppelte Resonatoren oder Transversalfilter mit variablen Koeffizienten. Auch andere Realisierungsmöglichkeiten sind denkbar.

Anschließend durchläuft mindestens eines der Teilsignale S1S und S1P eine beliebig ausgestaltete variable Verzögerungsleitung VV1, wodurch sich eine differentielle Laufzeitdifferenz $\Delta\tau_1$ des den oberen Zweig durchlaufenden Teilsignals unabhängig von der Frequenz gegenüber dem den unteren Zweig durchlaufenden Teilsignal einstellen lässt. Auch zur Erzeugung beliebiger Laufzeitdifferenzen existieren zahlreiche Realisierungsmöglichkeiten.

Des weiteren ist in diesem Ausführungsbeispiel im unteren Zweig ein variabler Abschwächer VA1 angeordnet, der dazu dient, die Verluste beider Zweige gleich groß einstellen zu können, so dass am Ende der Zweige gleiche Amplituden anliegen. Alternativ können auch in beiden Zweigen Elemente zur Pegeleinstellung vorgesehen werden. Wichtig ist, dass beide Zweige effektiv dieselben Verluste aufweisen. Die eingesetzten variablen Abschwächer sollten dazu möglichst polarisationsunabhängig und polarisationserhaltend sein.

Ein zweiter Polarisations-Strahlteiler respektive ein Polarisationskombinierer PK1 fügt die beiden Teilsignale mit orthogonaler Polarisation zu einem resultierenden Signal OS1 wieder zusammen. Am Ausgang des ersten Emulationselementes E1 liegt ein verzerrtes Signal OS1 an, dessen Hauptachse im Mittel unter 45°gedreht ist, sofern am Eingang des Polarisationskombinierers gleiche Amplituden beider Teilsignale anliegen. Aufgrund der Phasenunterschiede beider Teilsignale ist die resultierende Polarisation von OS1 elliptisch.

Anschließend durchläuft das Signal OS1 einen Polarisationssteller PS, der eine Drehung des am Ausgang des ersten Emulationselementes anliegenden Polarisationszustands mit variablem Drehwinkel $\alpha$ erlaubt.

Ein zweiter Strahlteiler PST2 spaltet das Eingangssignal des zweiten Emulationselementes E2 erneut in zwei orthogonale Anteile auf. Mit Hilfe einer in einem der beiden Zweige angeordneten zweiten variablen Verzögerungsleitung VV2 wird frequenzunabhängig eine Laufzeitdifferenz $\Delta\tau_2$ zwischen den beiden Signalanteilen erzeugt. Der zweite Abschwächer VA2, der in diesem Ausführungsbeispiel im unteren Zweig angeordnet ist, wird so eingestellt, dass beide Signale vor dem folgenden Polarisations-Kombinierer PK2 gleiche Amplituden aufweisen. Der zweite Polarisations-Kombinierer PK2 am Ausgang des zweiten Emulationselementes E2 fügt die beiden Polarisationen wieder zusammen.

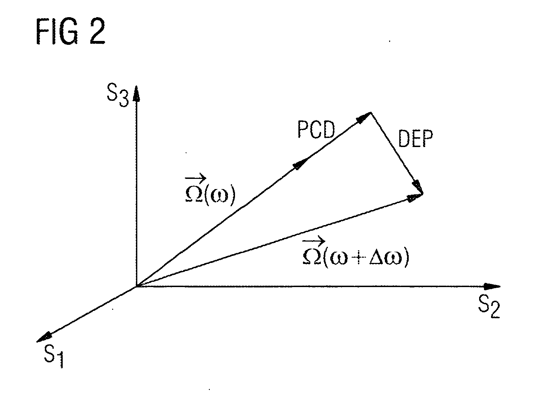

Zur Erläuterung der Funktionsweise der Anordnung aus Fig. 1 soll Fig. 2 betrachtet werden. PMD wird häufig in Form von Vektoren im Stokes-Raum dargestellt. Über mögliche Darstellungsweisen bzw. Notationen zur Beschreibung von PMD gibt die Veröffentlichung von J. P. Gordon und H. Kogelnik, "PMD fundamentals: Polarisation mode dispersion in optical fibers", in Proc. Nat. Academy Science, Vol. 97, Apr. 25, 200, S. 4541-4550 einen Überblick. Ein PMD-Vektor verknüpft die Information über die Richtung der schnellen und langsamen Hauptachsen eines doppelbrechenden Elements, welche auch als Polarisationshauptachsen (engl. "principal states of polarisation", abgekürzt PSP) am Ein- und Ausgang eines Elementes bezeichnet werden, und über den Laufzeitunterschied der beiden Polarisationsmoden DGD, welcher als Unterschied zwischen maximaler und minimaler Geschwindigkeit der Moden definiert ist.

Figur 2 stellt zwei PMD-Vektoren $\Omega$ im Stokes-Raum bei den Kreisfrequenzen $\omega$ und $\omega + \Delta\omega$ dar, wobei für die Frequenzen der Zusammenhang $\Delta\omega \ll \omega$ gilt. Durch die kleine Kreisfrequenzänderung $\Delta\omega$ ändert sich sowohl die Länge bzw. Norm als auch die Richtung des ursprünglichen PMD-Vektors. Die Längenänderung wird als polarisationsabhängige chromatische Dispersion PCD bezeichnet, die Richtungsänderung als Depolarisation DEP. Durch die Frequenzänderung ergibt sich der neue PMD-Vektor $\Omega(\omega+\Delta\omega)$. Dies bedeutet, dass allein durch die Frequenzänderung $\Delta\omega$ sowohl PCD als auch DEP erzeugt werden können.

Der erste Teil der erfindungsgemäßen Anordnung vor dem Polarisationssteller lässt sich mittels eines PMD-Vektors mit konstanter Richtung und linear über der Frequenz zu- bzw. abnehmender Länge (PCD) beschreiben. Die PCD lässt sich mit Hilfe des variablen Dispersionskompensators einstellen, die Länge des PMD-Vektors bzw. DGD $\Delta\tau_1$ bei der Mittenfrequenz mit Hilfe der variablen Laufzeitleitung.

Ohne den variablen Dispersionskompensator entspräche die Anordnung in Fig. 1 zwei doppelbrechenden Elementen mit variabler Verdrehung der schnellen Hauptachse des zweiten Elements gegenüber der des ersten. Der aus der Verkettung der beiden doppelbrechenden Elemente resultierende PMD-Vektor weist folgende Eigenschaften auf: Die Länge bzw. resultierende DGD lässt sich mit folgendem Ausdruck berechnen:

$$\Delta\tau = \sqrt{\Delta\tau_1^{\,2} + 2\Delta\tau_1\Delta\tau_2\cos(2\alpha) + \Delta\tau_2^{\,2}}\,,$$

in dem $\Delta\tau_1$ die differenzielle Gruppenlaufzeit des ersten Emulationselements bezeichnet, $\Delta\tau_2$ die des zweiten Emulationselementes und $\alpha$ den Winkel, um den der Polarisationssteller die Richtung des Polarisationsvektors verdreht. Zur Berechnung der Depolarisation DEP lässt sich der Ausdruck:

$$DEP = \Delta\tau_1 \, \Delta\tau_2 \, \sin(2\alpha)$$

verwenden. PCD tritt bei zwei doppelbrechenden Elementen nicht auf. In der erfindungsgemäßen Anordnung lässt sich die PCD mit Hilfe des variablen Dispersionskompensators, die DEP und die DGD durch geeignete differentielle Gruppenlaufzeiten $\Delta\tau_1$, $\Delta\tau_2$ sowie Polarisations-Drehwinkel $\alpha$ einstellen.

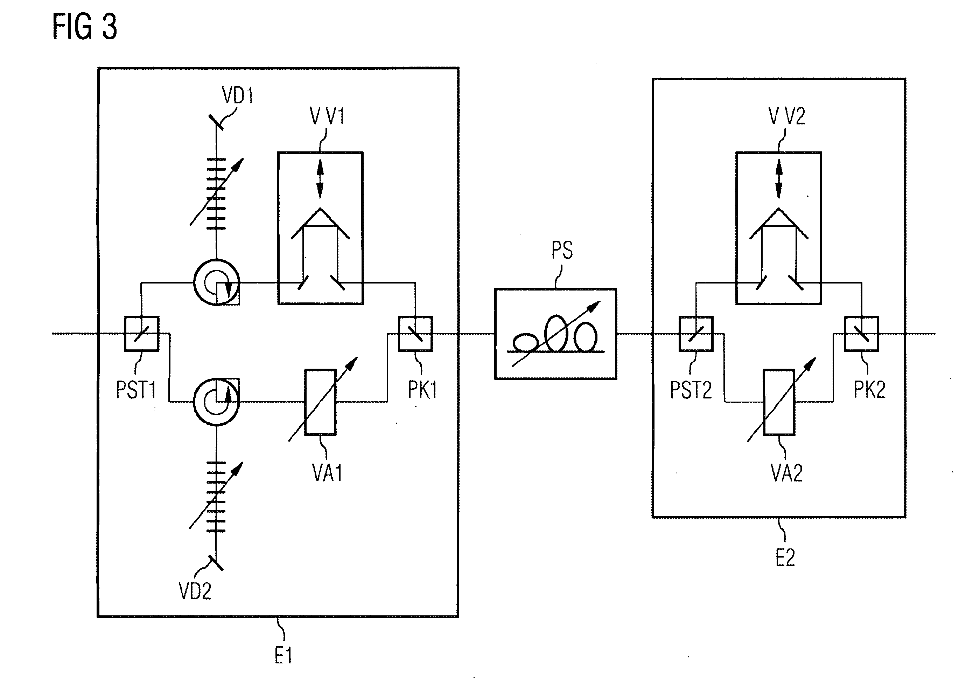

Figur 3 zeigt ein Blockschaltbild einer zweiten Ausführungsvariante des erfindungsgemäßen PMD-Emulators, bei der in beiden Zweigen jeweils ein Dispersionskompensator bestehend aus einem abstimmbaren Faser-Bragg-Gitter in Kombination mit einem Zirkulator untergebracht ist. In diesem Ausführungsbeispiel weisen die beiden variablen Dispersionsglieder VD1 und VD2 jeweils unterschiedliche Vorzeichen der einstellbaren Dispersion auf. So erfährt beispielsweise das parallel zur Einfallsebene polarisierte Teilsignal S1P eine "positive" Dispersion, bei der im normalen Dispersionsbereich die hochfrequenten Frequenzkomponenten, die so genannten "blauen" Frequenzkomponenten des p-polarisierten Signals langsamer propagieren als die niederfrequenten, so genannten "roten" Frequenzkomponenten, während das senkrecht zur Einfallsebene polarisierte Teilsignal S1S eine "negative" Dispersion mit umgekehrter Wirkung erfährt. Auf diese Weise liegt am Ausgang des ersten Emulationselementes eine symmetrische Signalverzerrung vor.

Die variablen Verzögerungsglieder VV1 und VV2 sind in Fig. 3 aus Umwegleitungen mit einstellbarer Länge ausgeführt. Der Polarisationssteller PS wird als Piezo-Faserquetscher ausgeführt. Statt eines variablen Polarisationsstellers lässt sich auch einer verwenden, der eine feste Polarisationsdrehung um einen bestimmten Winkel ungleich 0 Grad bzw. ganzzahligen Vielfachen von 90 Grad bewirkt. Die Einstellung der DEP und DGD erfolgt dann ausschließlich über die beiden differenziellen Gruppenlaufzeiten $\Delta\tau_1$ und $\Delta\tau_2$ vor und hinter dem Polarisationssteller PS.

Zur weiteren Verdeutlichung der Erfindung wird für das in Fig. 3 dargestellte Blockschaltbild ein Zahlenbeispiel gegeben. Eingestellt werden soll eine DGD von 10 ps, eine PCD von 40 $ps^2$ und eine DEP von 30 $ps^2$, entsprechend einer gesamten PMD zweiter Ordnung von 50 $ps^2$. Dazu wird am Dispersionselement VD1 eine Dispersion von +15,6 ps/nm eingestellt und am Dispersionselement VD2 ein Wert von -15,6 ps/nm. Die beiden Umwegleitungen werden so eingestellt, dass sich jeweils eine differenzielle Gruppenlaufzeit von $\Delta\tau_1 = \Delta\tau_2$ = 5,83 ps ergibt. Der Polarisationssteller wird auf einen Drehwinkel von 30,96 Grad eingestellt.

In einer weiteren nicht in den Fig. 1 und 3 dargestellten Ausführungsvariante ist zusätzlich zu dem oder den Dispersionskompensator(en) des ersten Emulationselementes E1 ein oder ein weiterer Dispersionskompensator in einem oder beiden Zweigen des zweiten Emulationselementes E2angeordnet. Auf diese Weise werden zwei doppelbrechende Elemente, deren differenzielle Gruppenlaufzeiten (DGD) über der Frequenz linear zu- bzw. abnehmen, miteinander verkettet.

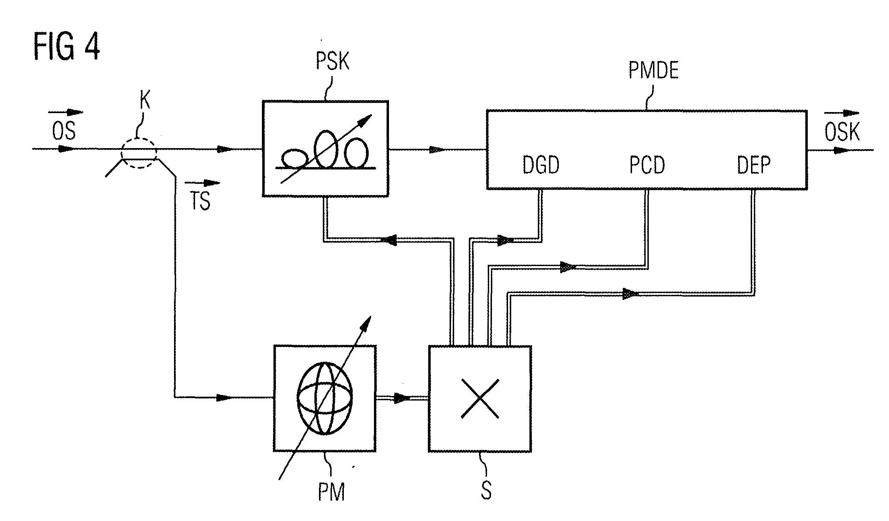

Die erfindungsgemäße Anordnung lässt sich sowohl zum Aufbau eines PMD-Emulators mit einstellbarer PMD erster und spektral flacher zweiter Ordnung verwenden, getrennt nach DEP und PCD, als auch zum Aufbau eines PMD-Kompensators. In Fig. 4 ist ein Blockschaltbild für einen PMD-Kompensator unter Verwendung des erfindungsgemäßen PMD-Emulators dargestellt. Ein Koppler K zweigt einen kleinen Teil TS des verzerrten und in seinem Polarisationszustand veränderten optischen Eingangssignals OS zu Steuerungszwecken ab. Das optische Eingangssignal OS wird anschließend einem Polarisationssteller PSK und dem erfindungsgemäßen PMD-Emulator PMDE zugeführt. Nach Durchlaufen von PMDE wird das kompensierte Signal OSK wieder an die Strecke abgegeben. Das zuvor am Koppler K abgezweigte Signal TS wird einem spektral hoch auflösenden Polarimeter PM zugeführt. Das Polarimeter misst die PMD am Ausgang der Strecke in Abhängigkeit von der Frequenz. Der derart ermittelte PMD-Vektor am Ausgang der Strecke weist neben den Beträgen der DGD, der DEP und der PCD auch eine bestimmte Richtung auf. Mit diesen Informationen werden innerhalb einer dem Polarimeter nachfolgenden Steuereinheit S die Laufzeitdifferenzen $\Delta\tau_1$, $\Delta\tau_2$ und der Polarisationsdrehwinkel $\alpha$ zwischen der schnellen und langsamen Hauptachse der doppelbrechenden Elemente gemäß den oben angegebenen Vorschriften ermittelt. Anschließend werden mittels der Steuerung S der Winkel des Polarisationsstellers PSK und die Beträge der DGD, PCD und DEP des Stellglieds PMDE eingestellt. Die Vorzeichen der DEP und PCD sowie die Abbildung des Signals am Ausgang der Strecke in den Emulator durch den Polarisationssteller PSK müssen dabei so gewählt werden, dass die Vektoren des Emulators antiparallel zu denen der Strecke zu liegen kommen. Dabei muss berücksichtigt werden, dass die DEP in umgekehrter Richtung zu der am Streckenausgang eingestellt wird. Ferner muss der Betrag der PCD ein zur Strecke entgegen gesetztes Vorzeichen aufweisen. Auf diese Weise wird eine Kompensation in einem Schritt erreicht. Ein langsames und iteratives Vorgehen wird mittels der Anordnung in Fig. 4 vermieden.

**Patentansprüche**

1. Anordnung zur Einstellung von Polarisationsmodendispersion erster und zweiter Ordnung aufweisend eine Serienschaltung aus

- einem ersten Emulationselement (E1) mit einer ersten einstellbaren Laufzeitdifferenz ($\Delta\tau_1$) zwischen einer schnellen und langsamen Hauptachse und mit einstellbarer chromatischer Dispersion (D),
- einem Polarisationssteller (PS) zur Einstellung eines Polarisationsdrehwinkels ($\alpha$) und
- einem zweiten Emulationselement (E2) mit einer zweiten einstellbaren Laufzeitdifferenz ($\Delta\tau_2$) zwischen der schnellen und langsamen Hauptachse,

wobei die Laufzeitdifferenzen ($\Delta\tau_1$, $\Delta\tau_2$), der Polarisations-drehwinkel ($\alpha$) und die chromatische Dispersion (D) derart eingestellt werden, dass sich jeweils ein gewünschter Wert für die differentielle Gruppenlaufzeit (DGD), die Depolarisation (DEP) und die polarisationsabhängige chromatische Dispersion (PCD) ergibt.

2. Anordnung nach Anspruch 1,
**dadurch gekennzeichnet,**
**dass** auch das zweite Emulationselement (E2) zusätzlich eine einstellbare chromatische Dispersion (D) aufweist.

3. Anordnung nach Anspruch 1 oder 2,
**dadurch gekennzeichnet,**
**dass** die Emulationselemente (E1, E2) als Kombination aus einem variablen doppelbrechenden Element und mindestens einem variablen Dispersionskompensator (VD1) ausgebildet ist.

4. Anordnung nach Anspruch 1 bis 3,
**dadurch gekennzeichnet,**
**dass** die Emulationselemente (E1, E2) eingangsseitig einen Polarisationsstrahlteiler (PST1, PST2) zur Aufteilung des Eingangssignals auf zwei orthogonal zueinander polarisierte Teilsignale (S1P, S1S) in einen ersten und zweiten Teilpfad und ausgangsseitig einen Polarisationskombinierer (PK1, PK2) zum Kombinieren der beiden Teilsignale (S1P, S1S) aufweisen, und
**dass** in mindestens einem der beiden Teilpfade ein variabler Dispersionskompensator (VD1, VD2) und eine variable Verzögerungsleitung (VV1, VV2) angeordnet sind.

5. Anordnung nach Anspruch 4,
**dadurch gekennzeichnet,**
**dass** in dem ersten Teilpfad ein variabler Dispersionskompensator (VD1) angeordnet ist und dass in dem zweiten Teilpfad die variable Verzögerungsleitung (VV1) angeordnet ist.

6. Anordnung nach Anspruch 4,
**dadurch gekennzeichnet,**
**dass** im ersten Teilpfad ein erster variabler Dispersionskompensator (VD1) angeordnet ist und im zweiten Teilpfad ein zweiter variabler Dispersionskompensator (VD2) angeordnet ist und dass die variable Verzögerungsleitung (VV1) in einem der beiden Teilpfade angeordnet ist.

7. Anordnung nach Anspruch 6,
**dadurch gekennzeichnet,**
**dass** bei Anordnung eines ersten variablen Dispersionskompensators (VD1) in dem ersten Teilpfad und eines zweiten variablen Dispersionskompensators (VD2) in einem zweiten Teilpfad, die beiden Dispersionskompensatoren (VD1, VD2) unterschiedliche Vorzeichen der einstellbaren Dispersion aufweisen.

8. Anordnung nach einem der vorhergehenden Ansprüche, **dadurch gekennzeichnet,**
**dass** in mindestens einem der beiden Teilpfade ein Mittel zur Pegeleinstellung (VA1) vorgesehen ist.

9. Anordnung zur Kompensation von Polarisationsmodendispersion erster und zweiter Ordnung,
die eingangsseitig einen Koppler (K) aufweist,
wobei der erste Ausgang des Kopplers (K) mit einem regelbaren Polarisationssteller (PSK) und nachfolgend mit einer Anordnung zur Einstellung von Polarisationsmodendispersion erster und zweiter Ordnung (PMDE) gemäß den Ansprüchen 1 bis 6 verbunden ist, und
der zweite Ausgang des Kopplers (K) mit einem Polarimeter (PM) mit nachfolgend angeschlossener Steuereinheit (S) verbunden ist, die entsprechend der von dem Polarimeter (PM) gemessenen Richtungen und Beträge der differentiellen Gruppenlaufzeit (DGD), der polarisationsabhängigen chromatischen Dispersion (PCD) und der Depolarisation (DEP) den Polarisationssteller (PSK) und die Anordnung zur Einstellung von Polarisationsmodendispersion ersten und zweiter Ordnung (PMDE) steuert.

**10.** Verfahren zur Einstellung von Polarisationsmodendispersion erster und zweiter Ordnung,

- bei dem für vorgegebene Werte der DGD, DEP und PCD gemäß der Formeln DGD = $\sqrt{\Delta\tau_1^2 + 2\Delta\tau_1\Delta\tau_2\cos(2\alpha) + \Delta\tau_2^2}$ und DEP = $\Delta\tau_1\,\Delta\tau_2\,\sin(2\alpha)$ Werte für eine erste Laufzeitdifferenz ($\Delta\tau_1$) zwischen einer schnellen und langsamen Hauptachse, für eine zweite Laufzeitdifferenz ($\Delta\tau_2$) zwischen einer schnellen und langsamen Hauptachse und für einem Drehwinkel $\alpha$ für die Polarisation berechnet wird,
- bei dem mittels eines ersten Elementes (E1) die erste Laufzeitdifferenz ($\Delta\tau_1$) eingestellt wird und/oder eine polarisationsabhängige chromatische Dispersion eingestellt wird, indem ein Eingangssignal in ein erstes und zweites zueinander orthogonal polarisiertes Teilsignal aufgeteilt, die Laufzeiten mindestens eines der Teilsignale frequenzabhängig verändert werden und die Teilsignale wieder zusammengefasst werden,
- bei dem anschließend mittels eines Polarisationsstellers die Polarisation des Ausgangssignals des ersten Elementes (E1) gedreht wird, und
- bei dem mittels eines zweiten Elementes (E2) die zweite Laufzeitdifferenz ($\Delta\tau_2$) eingestellt wird,

so dass die Polarisationsmodendispersion erster Ordnung und zweiter Ordnung, getrennt nach Depolarisation und polarisationsabhängiger chromatischer Dispersion, eingestellt werden, wobei die DEP und die PCD einen spektral flachen Verlauf aufweisen.

**Claims**

**1.** Arrangement for the adjustment of polarization mode dispersion of the first and second orders having a series circuit of

- a first emulation element (E1) having a first adjustable delay difference ($\Delta\tau_1$) between a fast and a slow major axis and having adjustable chromatic dispersion (D),
- a polarization controller (PS) for setting a polarization angle of rotation ($\alpha$) and
- a second emulation element (E2) having a second adjustable delay difference ($\Delta\tau_2$) between the fast and the slow major axis,

wherein the delay differences ($\Delta\tau_1$, $\Delta\tau_2$) of the polarization angles of rotation ($\alpha$) and the chromatic dispersion (D) are set in such a manner that in each case a desired value results for the differential group delay (DGD), the depolarization (DEP) and the polarization-dependent chromatic dispersion (PCD).

**2.** Arrangement according to Claim 1,
**characterized in that**
the second emulation element (E2) also additionally has an adjustable chromatic dispersion (D).

**3.** Arrangement according to Claim 1 or 2,
**characterized in that**
the emulation elements (E1, E2) are designed as a combination of a variable birefringent element and at least one variable dispersion compensator (VD1).

**4.** Arrangement according to Claims 1 to 3,
**characterized in that**
the emulation elements (E1, E2) have at their input end a polarization beam divider (PST1, PST2) for dividing the input signal onto two part-signals (S1P, S1S), polarized orthogonally with respect to one another, into a first and a second part-path and at their output end a polarization combiner (PK1, PK2) for combining the two part-signals (S1P, S1S),
and
**in that** a variable dispersion compensator (VD1, VD2) and a variable delay line (VV1, VV2) are arranged in at least one of the two part-paths.

**5.** Arrangement according to Claim 4,
**characterized in that**,
in the first part-path, a variable dispersion compensator (VD1) is arranged and **in that**, in the second part-path, the variable delay line (VV1) is arranged.

**6.** Arrangement according to Claim 4,
**characterized in that**,
a first variable dispersion compensator (VD1) is arranged in the first part-path and a second variable dispersion compensator (VD2) is arranged in the second part-path, and **in that** the variable delay line (VV1) is arranged in one of the two part-paths.

**7.** Arrangement according to Claim 6,
**characterized in that**,
in the case of the arrangement of a first variable dispersion compensator (VD1) in the first part-path and of a second variable dispersion compensator (VD2) in a second part-path, the two dispersion compensators (VD1, VD2) have different signs of the adjustable dispersion.

**8.** Arrangement according to one of the preceding claims, **characterized in that**
a means for level setting (VA1) is provided in at least one of the two part-paths.

**9.** Arrangement for the compensation of polarization mode dispersion of the first and second orders,
which has at its input end a coupler (K),
wherein the first output of the coupler (K) is connected to a controllable polarization controller (PSK) and subsequently to an arrangement for setting polarization mode dispersion of the first and second orders (PMDE) according to Claims 1 to 6, and the second output of the coupler (K) is connected to a polarimeter (PM) with subsequently connected control unit (S) which controls the polarization controller (PSK) and the arrangement for setting polarization mode dispersion of the first and second orders (PMDE) in accordance with the directions measured by the polarimeter (PM) and amounts of the differential group delay (DGD), the polarization-dependent chromatic dispersion (PCD) and the depolarization (DEP).

**10.** Method for the adjustment of polarization mode dispersion of the first and second orders,

- in which, for predetermined values of the DGD, DEP and PCD according to the formulae DGD = $\sqrt{\Delta\tau_1^2 + 2\Delta\tau_1\Delta\tau_2\cos(2\alpha) + \Delta\tau_2^2}$ *and* **DEP=$\Delta\tau_1\Delta\tau_2$sin(2$\alpha$),** values for a first delay difference ($\Delta\tau_1$) between a fast and a slow major axis, for a second delay difference ($\Delta\tau_2$) between a fast and a slow major axis and for an angle of rotation $\alpha$ for the polarization are calculated,
- in which the first delay difference ($\Delta\tau_1$) is set by means of a first element (E1) and/or a polarization-dependent chromatic dispersion is set in that an input signal is divided into a first and a second part-signal polarized orthogonally with respect to one another, the delays of at least one of the part-signals are changed in frequency-dependent manner and the part-signals are combined again,
- in which subsequently the polarization of the output signal of the first element (E1) is rotated by means of a polarization controller and
- in which the second delay difference ($\Delta\tau_2$) is set by means of a second element (E2), so that the polarization mode dispersion of the first order and second order are set separately according to depolarization and polarization-dependent chromatic dispersion, the DEP and the PCD having a spectrally flat characteristic.

**Revendications**

**1.** Agencement pour le réglage de la dispersion des modes de polarisation de premier et deuxième ordre, comportant un montage en série composé de :

- un premier élément d'émulation (E1) avec une première différence de temps de propagation réglable ($\Delta\tau_1$) entre un axe principal rapide et un axe principal lent et avec une dispersion chromatique réglable (D) ;
- un actionneur de polarisation (PS) pour régler un angle de rotation de polarisation ($\alpha$) ; et
- un deuxième élément d'émulation (E2) avec une deuxième différence de temps de propagation réglable ($\Delta\tau_2$) entre l'axe principal rapide et l'axe principal lent,

les différences de temps de propagation ($\Delta\tau_1$, $\Delta\tau_2$) des angles de rotation de polarisation ($\alpha$) et la dispersion chromatique (D) étant réglées de manière à obtenir à chaque fois une valeur souhaitée pour le temps de propagation différentiel de groupe (DGD), la dépolarisation (DEP) et la dispersion chromatique fonction de la polarisation (PCD).

**2.** Agencement selon la revendication 1, **caractérisé en ce que** le deuxième élément d'émulation (E2) présente également, additionnellement, une dispersion chromatique réglable (D).

**3.** Agencement selon la revendication 1 ou 2, **caractérisé en ce que** les éléments d'émulation (E1, E2) se présentent sous la forme d'une combinaison d'un élément biréfringent variable et d'au moins un compensateur de dispersion variable (VD1).

**4.** Agencement selon la revendication 1 à 3, **caractérisé en ce que** :

- les éléments d'émulation (E1, E2) comportent, côté entrée, un séparateur de faisceau de polarisation (PST1, PST2) pour répartir le signal d'entrée en deux signaux partiels polarisés orthogonalement entre eux (S1P, S1S) sur un premier chemin partiel et un deuxième chemin partiel et, côté sortie, un combineur de polarisation (PK1, PK2) pour combiner les deux signaux partiels (S1P, S1S) et
- un compensateur de dispersion variable (VD1, VD2) et une ligne à retard variable (VV1, VV2) sont agencés dans au moins l'un des deux chemins partiels.

**5.** Agencement selon la revendication 4, **caractérisé en ce qu'**un compensateur de dispersion variable (VD1) est situé dans le premier chemin partiel et **en ce que** la ligne à retard variable (VV1) est située dans le deuxième chemin partiel.

**6.** Agencement selon la revendication 4, **caractérisé en ce qu'**un premier compensateur de dispersion variable (VD1) est situé dans le premier chemin partiel et un deuxième compensateur de dispersion variable (VD2) est situé dans le deuxième chemin partiel **en ce que** la ligne à retard variable (VV1) est située dans l'un des deux chemins partiels.

**7.** Agencement selon la revendication 6, **caractérisé en ce que**, lorsqu'un premier compensateur de dispersion variable (VD1) est situé dans le premier chemin partiel et qu'un deuxième compensateur de dispersion variable (VD2) est situé dans un deuxième chemin partiel, les deux compensateurs de dispersion (VD1, VD2) présentent des signes différents de la dispersion réglable.

**8.** Agencement selon l'une des revendications précédentes, **caractérisé en ce qu'**est prévu, dans au moins l'un des deux chemins partiels, un moyen pour le réglage de niveau (VA1).

**9.** Agencement pour la compensation de la dispersion des modes de polarisation de premier et de deuxième ordre, lequel comporte un coupleur (K) côté entrée, la première sortie du coupleur (K) étant reliée à un actionneur de polarisation réglable (PSK), lui-même suivi d'un agencement pour le réglage de la dispersion des modes de polarisation de premier et de deuxième ordre (PMDE) selon les revendications 1 à 6, et la deuxième sortie du coupleur (K) étant reliée à un polarimètre (PM), lui-même suivi d'une unité de commande (S) qui commande l'actionneur de polarisation (PSK) et l'agencement pour le réglage de la dispersion des modes de polarisation de premier et de deuxième ordre (PMDE) conformément aux directions et valeurs absolues du temps de propagation différentiel de groupe (DGD) mesurées par le polarimètre (PM), à la dispersion chromatique fonction de la polarisation (PCD) et à la dépolarisation (DEP).

**10.** Procédé de réglage de la dispersion des modes de polarisation de premier et de deuxième ordre, dans lequel .

- des valeurs d'une première différence de temps de propagation ($\Delta\tau_1$) entre un axe principal rapide et un axe principal lent, d'une deuxième différence de temps de propagation ($\Delta\tau_2$) entre un axe principal rapide et un axe principal lent et d'un angle de rotation de polarisation $\alpha$ est calculée pour des valeurs données du DGD, de la DEP et de la PCD conformément aux formules

$$DGD \;=\; \sqrt{\Delta\tau_1^{\,2} + 2\Delta\tau_1\Delta\tau_2\cos(2\alpha) + \Delta\tau_2^{\,2}}$$

formules

et

$$DEP = \Delta\tau_1 \; \Delta\tau_2 \; \sin(2\alpha) \; ;$$

- la première différence de temps de propagation ($\Delta\tau_1$) et/ou une dispersion chromatique fonction de la polarisation sont réglées au moyen d'un premier élément (E1) par séparation d'un signal d'entrée en un premier et un deuxième signaux partiels polarisés orthogonaux entre eux, les temps de propagation d'au moins l'un des signaux partiels étant modifiés en fonction de la fréquence et les signaux partiels étant de nouveau réunis ;
- la polarisation du signal de sortie du premier élément (E1) subit ensuite une rotation au moyen d'un actionneur de polarisation ; et
- la deuxième différence de temps de propagation ($\Delta\tau_2$)
est réglée au moyen d'un deuxième élément (E2) de sorte que la dispersion des modes de polarisation de premier et de deuxième ordre est réglée séparément selon la dépolarisation et la dispersion chromatique fonction de la polarisation, la DEP et la PCD présentant un tracé spectralement plat.

FIG 1

FIG 2

# FIG 3

# FIG 4

EP 2 080 298 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 102006008748 A

- EP 1087245 A

**In der Beschreibung aufgeführte Nicht-Patentliteratur**

- **J. P. GORDON ; H. KOGELNIK.** PMD fundamentals: Polarisation mode dispersion in optical fibers. *Proc. Nat. Academy Science,* vol. 97, 4541-4550